# EUROPEAN PATENT APPLICATION

(11) **EP 1 553 474 A2**
(43) Date of publication of application: **13.07.2005**
(21) Application number: 05250013.9
(22) Date of filing: 05.01.2005
(51) Int. Cl.: G05D 7/06

(54) **Apparatus and method for controlling fluid flow using pneumatically operated valve**

(30) Priority: 06.01.2004 US 534590 P; 29.12.2004 US 25438
(71) Applicant: THE BOC GROUP, INC., Murray Hill, New Providence, New Jersey 07974-2082 (US)
(72) Inventor: Forshey, Randall George, Dublin California 94568 (US)
(74) Representative: Booth, Andrew Steven

(57) **Abstract**

A flow control device includes an inlet (9) for passing fluid into the device, an outlet (7) for passing fluid from the device, a pneumatic pressure controlling portion (5), a fluid flow control valve (2) actuated by pneumatic pressure supplied via the pneumatic pressure controlling portion, a flow meter (3) configured to measure flow rate of the fluid, and a controller (4) configured to control the pneumatic pressure controlling portion at least according to the flow rate measured by the flow meter. Actuation of the fluid flow control valve may cause adjustment of the flow rate.

## Description

The present invention relates to a device, method, and system for controlling the flow rate of a fluid. Some exemplary aspects of the invention may relate to a flow control device for semiconductor processing tools.

Some conventional fluid flow controlling arrangements are generally large devices with limited flow rate ranges. Further, some conventional arrangements may have relatively low repeatability and set point accuracy. In some instances, variations in upstream liquid delivery pressures (e.g., pulsations) may cause flow rates to drift and/or fluctuate outside of required tolerances. In addition, certain liquid delivery conditions―such as flow resistance, partially filled delivery lines, and suction―may also degrade flow control capability. Furthermore, a lack of sufficient responsiveness associated with some configurations may cause an overshoot, undershoot, and/or inadequate batch volume control of one or more fluids.

For these and other reasons, there is a need for alternative approaches.

In a first aspect, the present invention provides a flow control device comprising an inlet for passing fluid into the device, an outlet for passing fluid from the device, a flow meter for measuring the flow rate of fluid flowing from the inlet towards the outlet, pneumatic pressure controlling means, a fluid flow control valve configured to be actuated by pneumatic pressure supplied via the pneumatic pressure controlling means so as to adjust the flow rate of the fluid, and a controller for controlling the pneumatic pressure controlling means at least according to the flow rate measured by the flow meter.

A preferred embodiment provides a flow control device. The device may comprise an inlet for passing fluid into the device, an outlet for passing fluid from the device, a pneumatic pressure controlling portion, a fluid flow control valve configured to be actuated by pneumatic pressure supplied via the pneumatic pressure controlling portion, so as to adjust flow rate of the fluid, a flow meter configured to measure flow rate of the fluid, and a controller configured to control the pneumatic pressure controlling portion. The controller may control the pneumatic controlling portion at least according to the flow rate measured by the flow meter.

Another aspect relates to a flow control device that comprises an inlet for passing fluid into the device, an outlet for passing fluid from the device, a fluid flow control valve configured to be actuated so as to adjust flow rate of the fluid, a flow meter configured to measure the flow rate of the fluid, and a controller configured to control actuation of the fluid flow control valve.

The controller may control actuation of the fluid flow control valve via an algorithm. The algorithm may comprise determining at least one difference between the measured flow rate and a desired flow rate, selecting an adjustment amount band according to the difference, and controlling actuation of the fluid flow control valve according to the selected adjustment amount band. The adjustment amount band may be selected from a plurality of adjustment amount bands each associated with a differing range of differences. In some examples, the controller may be configured to control actuation of the fluid flow control valve at least according to the difference in flow rates and a proportional-integral-derivative feedback control method.

The device may further comprise a pressure sensor configured to measure the pressure of the fluid. For example, the controller may control the fluid flow control valve (e.g., via control of the pneumatic pressure controlling portion) at least according to the fluid pressure measured by the pressure sensor and the flow rate measured by the flow meter. In some examples, the pressure sensor may be upstream of the fluid flow control valve. The flow meter may be upstream of the fluid flow control valve. The flow meter may comprise an ultrasonic flow meter.

A second aspect of the present invention provides a system for use in flow control of multiple fluids. The system comprises a first flow control device and a second flow control device, wherein each flow control device is configured according to any flow control device as aforementioned.

In another aspect, the present invention provides a system for use in semiconductor processing, the system comprising at least one flow control device as aforementioned and at least one semiconductor processing tool. The semiconductor processing tool may receive fluid from the at least one flow control device.

In some examples including a pneumatic pressure controlling portion, the pneumatic pressure controlling portion may comprise a subcontroller and pressure sensor configured to measure the pneumatic pressure. The subcontroller may be configured to control the pneumatic pressure controlling portion at least according to the pneumatic pressure measured by the pressure sensor.

A further aspect relates to a method for controlling fluid flow. The method comprises providing a flow control device as aforementioned, measuring the flow rate with the flow meter, controlling the pneumatic pressure controlling portion at least according to the flow rate measured by the flow meter, and actuating the fluid flow control valve with pneumatic pressure from the pneumatic pressure controlling portion.

In some examples including a pneumatic pressure controlling portion, the pneumatic pressure controlling portion may comprise a proportional pneumatic pressure control valve.

In another aspect, a method for adjusting the measured flow rate to the desired flow rate comprises providing a flow control device as aforementioned, measuring the flow rate with the flow meter, determining at least one difference between the measured flow rate and a desired flow rate, selecting an adjustment amount band according to the difference, and controlling actuation of the fluid flow control valve according to the selected adjustment amount band. The adjustment amount band may be selected from a plurality of adjustment amount bands each associated with a differing range of differences.

Aside from the structural and procedural arrangements set forth above, the invention could include a number of other arrangements such as those explained hereinafter. It is to be understood that both the foregoing description and the following description are exemplary only.

Preferred features of the present invention will now be described, by way of example only, with reference to the accompanying drawings, in which:-
Figure 1 is a schematic view of an embodiment of a flow control device; and
Figure 2 is a schematic view of an exemplary flow control system including two devices each configured like the device of Figure 1.

Reference will now be made in detail to a few exemplary embodiments of the invention. Wherever possible, the same reference numbers are used in the drawings and the description to refer to the same or like parts.

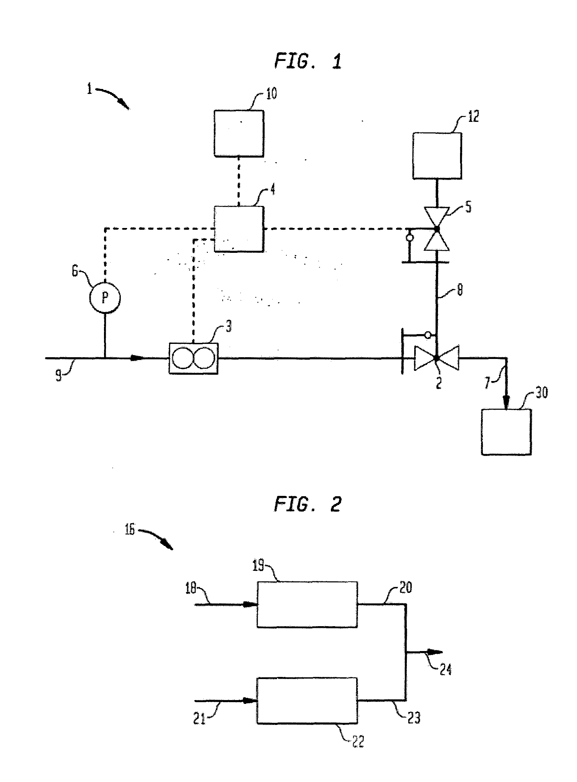

Figure 1 shows an embodiment of a flow control device 1. Fluid, such as a liquid, slurry, gas, and/or mixture thereof, enters the device 1 via a fluid inlet 9. As described in more detail below, a fluid flow control valve 2 adjusts the flow rate of fluid exiting the device 1 via a fluid outlet 7.

In the embodiment of Figure 1, the fluid flow control valve 2 is a pneumatically actuated valve that adjusts the flow rate of the fluid according to an amount of pneumatic pressure supplied to the pneumatic port of the fluid flow control valve 2. As shown in Figure 1, the device 1 also includes a flow meter 3, a controller 4, and a pneumatic pressure controlling portion 5 supplying controlled pneumatic pressure to the flow control valve 2 via a line 8. Flow meter 3 measures the flow rate of fluid flowing from the inlet 9 to the outlet 7 and communicates with the controller 4 to supply the controller 4 with an electronic signal indicative of the measured flow rate. The controller 4 in turn communicates with the pneumatic pressure controlling portion 5 to electronically control the pneumatic pressure controlling portion 5 and thereby adjust the amount of pneumatic pressure supplied to the flow control valve 2.

The flow control valve 2 may be configured to increase and/or decrease the flow rate of the fluid in an amount related (e.g., proportional) to an increase and/or decrease of the amount of pneumatic pressure supplied to the valve 2. The fluid flow control valve 2 may also be configured to substantially maintain a liquid flow rate in an amount related (e.g., proportional) to a substantially maintained pneumatic pressure supplied to the valve 2. As compared to some other alternative types of flow valve arrangements, the use of a pneumatically actuated valve may optionally enable more rapid, accurate, and compliant valve controlling response. Further, the use of a pneumatically actuated valve may enable the valve 2 to better track a control signal.

In some examples, the flow control valve 2 may be a pneumatically controlled valve manufactured by Asahi. As schematically depicted in Figure 1, the controller 4 may be configured to act in response to sensed fluid pressure upstream from the valve 2 and to adjust the pneumatic pressure supplied to valve 2 to compensate for upstream pressure fluctuations. Other types of valves may also be used.

Flow meter 3 may be any type of device capable of being used to measure flow rate of a fluid. In at least some examples, the flow meter 3 may have a relatively high degree of accuracy. For example, the flow meter 3 may be an ultrasonic flow meter. One exemplary flow meter is an ultrasonic flow meter manufactured by Tokyo Flow Meter.

The flow meter 3 may be positioned to measure the fluid flow rate upstream of fluid flow control valve 2, as shown in Figure 1. Alternatively, the flow meter may be positioned to measure the fluid flow rate downstream of valve 2.

As mentioned above, the amount of pneumatic pressure supplied to the flow control valve 2 via line 8 may be controlled by pneumatic pressure controlling portion 5. For example, the pressure controlling portion 5 may be configured to receive pressurized gas (e.g., a pressurized inert gas such as nitrogen or pressurized air) from a pressurized gas source 12 and then output the gas to line 8 at a pressure controlled according to an electronic signal supplied by the controller 4. The pressure controlling portion 5 could include one or more valves and/or pressure regulators. In some examples, the pressure controlling portion 5 may be a proportional pneumatic pressure control valve. One exemplary valve may include one valving arrangement for outputting some of the input gas via line 8 and another valving arrangement for bleeding some of the input gas from the valve.

The pressure controlling portion 5 may be able to provide output pressures in a range of pressures that are within the range of pressures that may be used to control the flow control valve 2. For example, the pressure controlling portion 5 may be configured to provide output pressures in a range of 0 to about 50 PSI or any other range.

As schematically shown in Figure 1, the pneumatic pressure controlling portion 5 may be configured to sense pneumatic pressure in the line 8 and to adjust the pneumatic pressure control to compensate for pressure fluctuations in line 8. In some examples, the pressure controlling portion 5 may have its own subcontroller controlling the pneumatic pressure controlling portion 5 at least according to the measured downstream pneumatic pressure. Such an exemplary arrangement may have a control loop associated with the subcontroller, which may be in addition to a possible control loop associated with the controller 4.

In some examples, the device 1 may include an optional pressure sensor 6 configured to measure pressure of the fluid and communicate with controller 4 to supply a signal indicative of the measured fluid pressure. The pressure sensor 6 may be positioned to sense pressure of the fluid upstream of the flow control valve 2, as shown in Figure 1. Such an arrangement may possibly improve output fluid flow rate stability when the supply of fluid to the device 1 has a varying pressure. Alternatively, pressure sensor 6 may be positioned to sense fluid pressure downstream of valve 2.

The device 1 may also include an input portion 10 configured to enable input into the controller 4 of a desired fluid flow rate. In some examples, the input portion 10 may include a keypad, a connection to a computer, a local or remote device, or any other configuration enabling a user to input a desired fluid flow rate. Alternatively (or additionally), the input portion 10 may include a memory that stores one or more desired fluid flow rates and/or a separate processor that may determine a fluid flow rate. The controller 4 receives electronic signals from the flow meter 3, the pressure sensor 6, and the input portion 10. Based on one or more of those signals, the controller 4 may determine an appropriate signal to send to the pressure controlling portion 5 so as to cause a particular pneumatic pressure in line 8 and thereby cause a particular fluid flow rate via flow control valve 2. The controller 4 may vary the signal output to the pressure controlling portion 5 according to any changes in the input signals from the flow meter 3, the pressure sensor 6, and the input portion 10. In some instances, pressure in the line 8 may be altered to either maintain a substantially steady state flow rate from the device 1 (e.g., when pressure of liquid flowing into the device 1 varies) and/or change the fluid flow rate from the device 1 (e.g., in response to a varied input from input portion 10).

In some examples, the controller 4 may be a PLC, an embedded or single board controller, or any other computing device, such as a PC. The controller 4 may use control logic or an algorithm to analyze the flow rate and optionally the influent pressure signal from sensor 6. The controller 4 may also determine a difference between the desired flow rate and the measured flow rate and generate an adjustment signal, which may be sent to controlling portion 5. This algorithm may be designed to compensate for specific behaviours of controlling portion 5 and fluid flow control valve 2. Such compensation may include: i) anticipation of mechanical valve actuation delays; ii) biasing of the control signal to increase valve opening or closing rates to closely track rapid changes in flow, pressure, or demanded flow rate; and/or iii) inverse biasing of the control signal to damp out ringing and/or overshoot of valve response. These compensations may be designed for specific hardware combinations.

Additionally, the flow meter 3 and fluid flow control valve 2 may be selected for specific flow rate ranges.

Further, if a control algorithm is used, the algorithm and controlling portion 5 may allow for a high turn-down ratio for flow rate, while providing high accuracy across the entire flow rate range. Turn-down refers to the ability to operate at a value lower than the full-scale value of the device; for example, a high turn-down ratio flow controller may possibly operate accurately at both relatively low flows and high flows, without changing hardware. Additionally, the control algorithm may compensate for specific valve characteristics by anticipating valve response to control signals and biasing the control signals to correct such valve response. This compensation may produce higher compliance for valve 2, better tracking between valve position and desired flow rate, and a more repeatable and stable flow rate.

In controlling pneumatic pressure controlling portion 5, controller 4 may use a proportional-integral-derivative ("PID") feedback control method to adjust electronic control signal and/or pneumatic pressure in line 8. In a PID feedback control method, the controller 4 may calculate an error, which is based on the difference between the measured flow rate and the desired flow rate. The term "error," as used in this disclosure, is broadly defined as the difference between the measured flow rate and the desired flow rate. In this embodiment, the "proportional" term would refer to this error (or difference in flow rates), the "integral" term would refer to the sum of errors over a period of time, and the "derivative" term would refer to the rate of change of the errors over a period of time. While all three terms could be used in a PID feedback control method, one or more of the terms may be set to zero. Accordingly, the electronic control signal from controller 4 may vary as a function of the "proportional," "integral," and/or "derivative" terms of a PID loop; again, these terms vary based on the difference between the desired flow rate and the measured flow rate.

The algorithm may also use both feed-forward (anticipating the correct fluid flow control valve 2 position) and feedback (measuring the flow rate after an adjustment is made) control methods. Using both control methods may provide for better performance. Alternatively, either one of the following two methods may be used alone in controlling flow.

In other examples, a combination of two basic methods to control the flow may be used, which are described below.

The first method may be a non-linear implementation of the integral term of the PID feedback control method. For example, an algorithm may use the history of the error to compute the controller 4 output, which may then actuate the fluid flow control valve 2 (or control the pneumatic pressure controlling portion 5). In these examples and during each program scan, the controller 4 may use the desired flow, the current flow, and the current pneumatic pressure setting to increment or decrement the pneumatic pressure based on the error. If, for example, this pressure change does not result in zero error, the controller 4 may iteratively apply the method again during the next scan. Additionally, the controller 4 may divide the possible error into several bands and apply a different pressure correction factor depending on the band. In examples using varying pressure correction factors, the controller 4 may actuate the fluid flow control valve 2 (or control the pneumatic pressure controlling portion 5) according to the selected band.

The second method may be a feed-forward feedback control method. In feed-forward, an additional input is added to the system that is based on knowledge of an event that may cause an error to develop. A good example of a feed-forward control system is a water heater control loop. In the water heater example, the PID (or other feedback-based controller) continuously adjusts the heater output to maintain a desired temperature. If the flow rate through the water heater suddenly changes, the temperature will correspondingly change and the control loop will respond to the change in temperature. In a system with feed-forward, the water flow rate is monitored and the output to the heater is adjusted in response to a change in the flow rate in anticipation of the error that would develop. In this feed-forward control system, the system may respond more quickly to changes in flow. As applied to the present example, the controller 4 may use the requested flow rate change to compute and anticipate the expected pneumatic pressure setting for fluid flow control valve 2. For example, the expected (or anticipated) pneumatic pressure setting may be calculated from an equation that is derived from a calibration procedure performed on 1, 2, 3, or any number of flow points. After determining the flow points, a second order differential equation may be fit to the flow points and controller 4 may use the equation to calculate the pneumatic pressure with some accuracy. A higher or lower order equation may also be used depending on the desired accuracy. In a further example, the controller 4 may adjust the pneumatic pressure to this anticipated pressure while also using an integral or other method for the control loop.

As shown in Figure 1, the controlled flow rate passing from the device 1 via the outlet 7 may be conveyed to another component 30 that may use the fluid. For example, the component 30 may be a semiconductor manufacturing tool and the device 1 and tool might be parts of a system for use in semiconductor manufacturing. Some examples of semiconductor manufacturing tools include load locks, wafer polishing tools, wafer etching tools, and any other type of device used in the manufacture of a semiconductor.

Figure 2 schematically illustrates an embodiment of a system including a first flow control device 19 and a second flow control device 22, wherein each of the devices 19 and 22 may be configured identical to the fluid flow control device 1 previously described. A first fluid enters first flow control device 19 via fluid inlet 18, and exits device 19 via fluid outlet 20. A second fluid enters second flow control device 22 via fluid inlet 21, and exits device 22 via fluid outlet 23. The outlets 20 and 23 may be flow coupled together so as to create a blended fluid combination that may be passed from the system 16 via a line 24.

It will be apparent to those skilled in the art that various modifications and variations can be made to the structure and methodology described herein. For example, although the device is described in connection with a fluid flow control valve actuated via pneumatic pressure, other types of fluid flow control valves may be used (e.g., stepper motor actuated valves, solenoid actuated valves, etc.). Thus, it should be understood that the invention is not limited to the subject matter discussed in the specification. Rather, the present invention is intended to cover modifications and variations.

## Claims

1. A flow control device comprising an inlet for passing fluid into the device, an outlet for passing fluid from the device, a flow meter for measuring the flow rate of fluid flowing from the inlet towards the outlet, pneumatic pressure controlling means, a fluid flow control valve configured to be actuated by pneumatic pressure supplied via the pneumatic pressure controlling means so as to adjust the flow rate of the fluid, and a controller for controlling the pneumatic pressure controlling means at least according to the flow rate measured by the flow meter.

2. A flow control device according to Claim 1, comprising a pressure sensor for measuring the pressure of the fluid, wherein the controller is configured to control the pneumatic pressure controlling means at least according to the fluid pressure measured by the pressure sensor and the flow rate measured by the flow meter.

3. A flow control device according to Claim 2, wherein the pressure sensor is located upstream of the fluid flow control valve.

4. A flow control device according to any preceding claim, wherein the flow meter is located upstream of the fluid flow control valve.

5. A flow control device according to Claim 1, wherein the pneumatic pressure controlling means comprises a pressure sensor for measuring the pneumatic pressure, and a subcontroller for controlling the pneumatic pressure controlling means at least according to the pneumatic pressure measured by the pressure sensor.

6. A flow control device according to any preceding claim, wherein the flow meter comprises an ultrasonic flow meter.

7. A flow control device according to any preceding claim, wherein the controller is configured to control the pneumatic pressure controlling means at least according to a difference between the flow rate measured by the flow meter and a desired flow rate.

8. A flow control device according to Claim 7, wherein the controller is configured to control the pneumatic pressure controlling means at least according to the difference in flow rates and a proportional-integral-derivative feedback control method.

9. A flow control device according to any preceding claim, wherein the pneumatic pressure controlling means comprises a proportional pneumatic pressure control valve.

10. A flow control device according to any preceding claim, wherein the controller is configured to control actuation of the fluid flow control valve according to an algorithm, wherein the algorithm comprises determining at least one difference between the measured flow rate and a desired flow rate, selecting an adjustment amount band according to the difference, wherein the adjustment amount band is selected from a plurality of adjustment amount bands each associated with a differing range of differences, and controlling actuation of the fluid flow control valve according to the selected adjustment amount band.

11. A system for use in flow control of multiple fluids, comprising a first flow control device, and a second flow control device, wherein each of the first flow control device and the second fluid flow control device is configured according to a flow control device according to any preceding claim.

12. A system for use in semiconductor processing, comprising at least one flow control device according to any of Claims 1 to 10, and at least one semiconductor processing tool, wherein the semiconductor processing tool receives fluid from the at least one flow control device.

13. A method for controlling fluid flow, the method comprising providing a device according to any of Claims 1 to 10, measuring the flow rate with the flow meter, controlling the pneumatic pressure controlling means at least according to the flow rate measured by the flow meter, and actuating the fluid flow control valve with pneumatic pressure from the pneumatic pressure controlling means.

14. A flow control device comprising an inlet for passing fluid into the device, an outlet for passing fluid from the device, a flow meter for measuring the flow rate of the fluid flowing from the inlet towards the outlet, a fluid flow control valve configured to be actuated so as to adjust the flow rate of the fluid, and a controller for controlling actuation of the fluid flow control valve according to an algorithm, wherein the algorithm comprises determining at least one difference between the measured flow rate and a desired flow rate, selecting an adjustment amount band according to the difference, wherein the adjustment amount band is selected from a plurality of adjustment amount bands each associated with a differing range of differences, and controlling actuation of the fluid flow control valve according to the selected adjustment amount band.

15. A flow control device according to Claim 14, wherein the controller is configured to control actuation of the fluid flow control valve at least according to the difference in flow rates and a proportional-integral-derivative feedback control method.

16. A flow control device according to Claim 14 or Claim 15, comprising a pressure sensor configured to measure the pressure of the fluid, wherein the controller is configured to control the fluid flow control valve at least according to the fluid pressure measured by the pressure sensor and the flow rate measured by the flow meter.

17. A flow control device according to Claim 16, wherein the pressure sensor is located upstream of the fluid flow control valve.

18. A flow control device according to any of Claims 14 to 17, wherein the flow meter is located upstream of the fluid flow control valve.

19. A flow control device according to any of Claims 14 to 18, wherein the flow meter comprises an ultrasonic flow meter.

20. A system for use in flow control of multiple fluids, comprising a first flow control device, and a second flow control device, wherein each of the first flow control device and the second fluid flow control device is configured according to a flow control device according to any of Claims 14 to 19.

21. A system for use in semiconductor processing, comprising at least one flow control device according to any of Claims 14 to 19, and at least one semiconductor processing tool, wherein the semiconductor processing tool receives fluid from the at least one flow control device.

22. A method for controlling fluid flow, the method comprising providing a device according to any of Claims 14 to 19, measuring the flow rate with the flow meter, determining at least one difference between the measured flow rate and the desired flow rate, selecting the adjustment amount band according to the difference, and controlling actuation of the fluid flow control valve according to the selected adjustment amount band.
